# EUROPEAN PATENT APPLICATION

(11) **EP 4 485 878 A1**
(43) Date of publication of application: **01.01.2025**
(21) Application number: 23182640.5
(22) Date of filing: 30.06.2023
(51) Int. Cl.: H04L 41/14, H04L 41/147, H04L 41/149, H04L 41/16

(54) **METHOD AND SYSTEM FOR CONFIGURING DEVICES OF A COMMUNICATIONS NETWORK**

(71) Applicant: Siemens Aktiengesellschaft, 80333 München (DE)
(72) Inventor: Blenk, Andreas, 86916 Kaufering (DE); Varastehhajipour, Amir, 81379 München (DE)
(74) Representative: Siemens Patent Attorneys

(57) **Abstract**

The present invention relates to configuring devices of a communications network based on simulating a behaviour of the network by means of a digital twin (6) of the network (5). The digital twin is provided with network configuration information (12) applied to the network, with information on an intended use (11) of the network, and with status data (13) collected in the network. From network metrics (15), and failure and/or performance issue scenarios simulated (14) by the digital twin, monitoring rules (16) are derived to detect network failures and/or network performance issues. In accordance with the monitoring rules, network alarms are generated by a network monitoring component (4). An analytic component (8) specifies and requests a simulation of additional failure and/or performance issue scenarios (14') within the digital twin.

## Description

The present invention relates to a method for configuring devices of a communications network, in particular a communication network of an industrial automation system, and a system for implementing the method.

Industrial automation systems are designed to monitor and control technical processes, particularly for factory, process or building automation, and provide for operating control devices, sensors, machines, and industrial plants autonomously and substantially independent from human intervention. Usually, industrial automation systems comprise a plurality of automation devices interconnected with each other via an industrial communication network. Due to a continuously growing impact of information technology on industrial automation systems, approaches for reliably providing monitoring and control functions within industrial automation systems gain increasing importance. Challenges experienced in industrial automation systems frequently result from message traffic with a large number of messages which are relatively short.

Generally, interruptions of communication connections might cause an unfavourable repetition of transmission of messages. Again, this usually results in additional loads on communication connections, which may further lead to malfunctions or system faults. If messages are not transmitted at all or not transmitted completely, an industrial automation system may be prevented from changing into a safe operating state or from remaining in such a safe operating state. Finally, this may lead to a costly outage of an entire production system.

WO 2023/011861 A1 discloses an automated method for operating a communication system, whereby digital twins of software-based applications running on the communication system and of corresponding hardware of the communication system configured to run the applications are continuously updated based on communication related parameters measured in the communication system. The communication system is parameterized correspondingly to the updated digital twins. Further, the communication system comprises a control module configured to control an industrial device.

The European patent application with the application number 22212150.1 relates to a method for linking a real object with a digital twin, wherein object data is provided by an object module, and twin data specifying a current status of the digital twin is stored in a digital twin module. Depending on the object data, refresh data is sent by the object module to the digital twin module via a communication network. The refresh data is received by the digital twin module, and the digital twin module refreshes the twin data dependent on the received refresh data. Further, a transmission of the refresh data via the communication network is monitored. Depending on a detected predefined error pattern related to the transmission of the refresh data, countermeasure data designed to trigger a countermeasure is determined and transmitted to at least the object module or the digital twin module.

In the European patent application with the application number 22212193.1, a search system for finding configuration mappings in a monitoring network connecting physical assets with their associated digital twins is described. The search system comprises a control module configured to receive a request of operation intent related to a physical asset and to implement a configuration mapping in the monitoring network. The system further comprises a configuration finder module configured to generate configuration mappings based on the operation intent related to the physical asset. By means of a configuration selection module, one of the generated configuration mappings is selected and send to the control module for its implementation in the monitoring network.

According to the European patent application with the application number 22196186.5, for the automated configuration of a multi-VLAN communications network, a VLAN port operating mode is defined for each VLAN, starting from communication terminals at ports of switches or routers along the paths assigned to each VLAN, depending on how the port is used by the VLAN. First VLAN port configuration markers are used to define the borders of VLAN segments, with incoming and outgoing frames at the port being assigned to the same VLAN. Second VLAN port configuration markers are used to set limits for tracking the paths assigned to the VLAN in order to define the VLAN port operating modes. Third VLAN port configuration markers are used to set limits for tracking the paths assigned to the VLAN in respect of outgoing frames only in order to define the VLAN port operating modes. Tracking of the paths assigned to each VLAN and a configuration of the ports encompassed by these paths based on the definition of the VLAN port operating modes is controlled using the VLAN port configuration markers.

Today's networks, and in particular industrial networks, are largely configured in a manual way. For instance, when automation engineers deploy a new programming logic control (PLC) program, they usually configure a network in a best-effort manner. Moreover, particularly switches are frequently configured manually, e.g., by means of command line interface (CLI) of the respective switch. Furthermore, software-based network controllers are not yet common practice in today's manufacturing networks. Under these circumstances, when networks are upgraded or failures happen, a human network operator must be involved in resolving and fixing the problem.

Also, network monitoring is often still a manual task. To monitor and verify networks at runtime, network operators are also involved with manual operation. Given an intent from an automation engineer, network operators must derive both rules and configurations for operation on the one hand and rules for the monitoring of the network on the other hand. Although it is generally possible to derive control and configuration automatically, network operators are still challenged to configure monitoring systems properly. Finally, in case of adapting network configuration and control at runtime, network operators might have to reevaluate the current status of a monitoring system and adapt it manually at runtime.

The present invention is based on the problem of realizing an error-prone method for configuring devices of complex communications networks and for consistently and automatically defining network monitoring rules as well as providing appropriate means for implementing the method.

This problem is solved according to the present invention by means of a method having the features specified in claim 1 and by means of a system having the features specified in claim 12. Advantageous embodiments of the present invention are specified in the dependent patent claims.

According to the present invention, a method for configuring devices of a communications network, wherein the method comprises simulating a behaviour of the network by means of a digital twin of the network. Besides the method comprises providing the digital twin with network configuration information applied to the network, with information on an intended use of the network, and with status data collected in the network. Moreover, network metrics are generated by the digital twin and provided to an analytic component. Generally, it is possible to operate a plurality of digital twins in parallel. This enables a scalable and fast solution to efficiently provide for network metrics.

Preferably, the network metrics are generated based on a network model which is built from the network configuration information, the information on the intended use of the network, and the status data collected in the network. The network model is maintained and updated by the digital twin. Advantageously, the digital twin comprises digital representations of network devices, network applications, and end devices respectively connected to the communications network.

Further, the method according to the present invention comprises identifying, by the analytic component from the network metrics, failure and performance issue scenarios respectively simulated by the digital twin, and deriving, from the failure and performance issue scenarios respectively, monitoring rules to detect network failures and network performance issues. In accordance with the monitoring rules, network alarms are generated by a network monitoring component. Preferably, the analytic component is implemented by means of an artificial intelligence system.

Upon occurrence of network alarms, the method according to the present invention comprises modifying, by a network controller, configurations of selected network devices according to error and performance handling actions respectively associated with the respective network alarm. Moreover, the method comprises specifying and requesting, by the analytic component, a simulation of additional failure and performance issue scenarios respectively within the digital twin. The additional failure and performance issue scenarios respectively are sent, by a failure injection component, to the digital twin for being simulated. Advantageously, the failure and performance issue scenarios respectively are first provided to the failure injection component by the analytic component, and the failure injection component then sends the failure and performance issue scenarios respectively to the digital twin.

By above features, the present invention significantly reduces or even supersedes human effort to setup control and monitoring functions particularly within complex industrial networks. Especially, an automated monitoring and verification generation allows for less involvement of human operators. This also applies to an automated network testing based on digital network twins which facilitates an automated root-cause analysis.

In another advantageous variant of the present invention, wherein the intended use of the network is provided to the network controller which calculates quality of service parameters derived from the intended use for at least one affected network path and configures associated network devices accordingly. Particularly, the network devices may comprise routers, switches, bridges, wireline end devices, access points, and wireless clients respectively. Preferably, the network configuration information applied to the network is provided to the digital twin by the network controller. This allows for an efficient optimization of network operation and for effectively dealing with quality of service requirements especially in industrial automation networks.

According to a further variant of the present invention, the digital twin determines an impact of the failure scenarios on network performance in consideration of the intended use of the network. Thus, both failure scenarios and performance aspects can be dealt with in a holistic manner being based on the intended use of the network. Preferably, the digital twin is not updated during a network planning phase, whereas the digital twin is updated during a network operation phase. Thus, a network can be planned and optimized completely within an industrial metaverse which makes an optimization of an industrial communication network possible, without having yet a concrete realization.

In yet another advantageous variant of the present invention, the analytic component maintains and updates a network verification model generated from the network metrics. Besides, the analytic component determines failure and performance issue scenarios respectively previously unexplored within the digital twin. Accordingly, the analytic component requests the simulation of the previously unexplored failure and performance issue scenarios respectively within the digital twin. For instance, the analytic component might use an intelligent search algorithm such as Bayesian Optimization (BA) to find new networking scenarios, which are currently completely unexplored, i.e., have a low confidence. Preferably, the analytic component compares a ground truth - an operation without any failures and performance issues respectively - to any network metrics associated with failures and performance issues respectively. By doing so, the analytic component can derive the monitoring rules efficiently from comparing the ground truth to network metrics associated with failures and performance issues respectively.

According to another aspect of the present invention, a system for executing a method described above is provided. The system is designed for configuring devices of a communications network and comprises a digital twin, an analytic component, a failure injection component, a network monitoring component, and a network controller. The digital twin is configured to simulate a behaviour of the network and to be provided with network configuration information applied to the network, with information on an intended use of the network, and with status data collected in the network. Further, the digital twin is configured to generate network metrics and to provide the network metrics to the analytic component.

The analytic component of above system is configured to identify, from the network metrics, failure and performance issue scenarios respectively simulated by the digital twin, and to derive, from the failure and performance issue scenarios respectively, monitoring rules to detect network failures and network performance issues respectively. Accordingly, the network monitoring component is configured to generate network alarms in accordance with the monitoring rules.

The network controller of above system is configured to modify, upon occurrence of network alarms, configurations of selected network devices according to error and performance handling actions respectively associated with the respective network alarm. Further, the analytic component is additionally configured to specify and request a simulation of additional failure and performance issue scenarios respectively within the digital twin. Accordingly, the failure injection component is configured to send the additional failure and performance issue scenarios respectively to the digital twin for being simulated.

The present invention will be explained in more detail with reference to exemplary embodiments illustrated in the attached drawing, in which
- Figure 1: shows a system for configuring devices of a communications network;
- Figure 2: shows a sequence diagram illustrating how the system according to Figure 1 operates during a planning phase of a network;
- Figure 3: shows a sequence diagram illustrating how the system according to Figure 1 operates during a operational phase of the network.

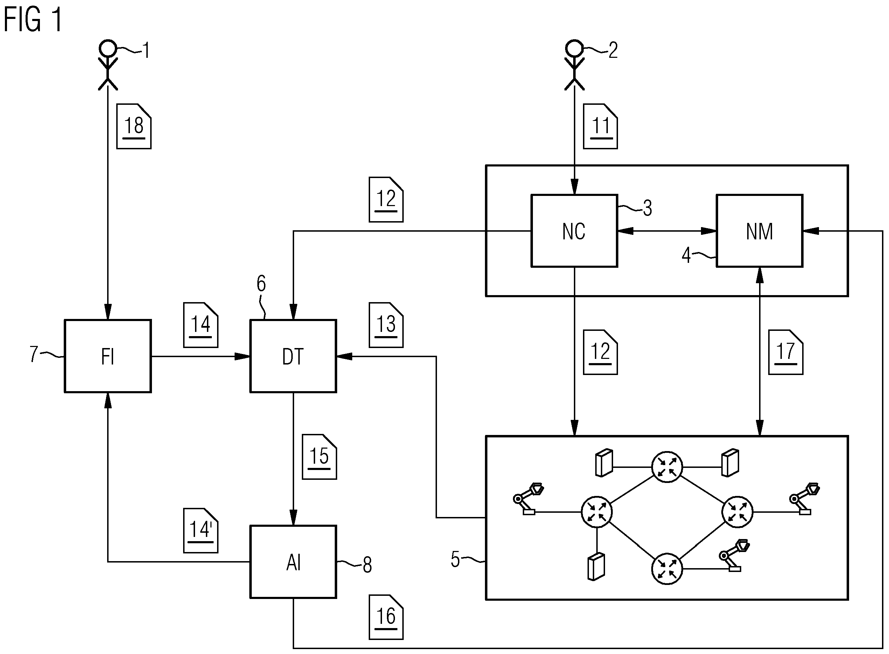

The system according to Figure 1 is designed for configuring devices of a communications network 5, and comprises a network controller 3, a network monitoring component 4, a digital twin 6 of the network 5, a failure injection component 7, and an analytic component 8. Particularly, the digital twin 6 comprises digital representations of network devices, network applications, and end devices connected to the communications network 5. Preferably, the analytic component 8 is implemented by means of an artificial intelligence system.

An intended use 11 of the network 5 is provided by a user 2 to the network controller 3 which calculates quality of service parameters derived from the intended use for at least one affected network path and configures associated network devices accordingly. The network devices may comprise routers, switches, bridges, wireline end devices, access points, wireless clients, and manufacturing machines, e.g. programmable logic controls, or robots, respectively.

The digital twin 6 is configured to simulate a behaviour of the network 5 and to be provided with information on the intended use 11 of the network 5, with network configuration information 12 applied to the network 5 by the network controller 3, with real-time status data 13 collected in the network 5, and with failure and performance issue scenarios 14 sent by the failure injection component 7. The real-time status data 13 collected in the network 5 may also comprise data from connected applications and machines. The information on the intended use 11 of the network 5, and the network configuration information 12 are provided to the digital twin 6 by the network controller 3.

Moreover, the digital twin 6 is configured to generate network metrics 15 and to provide the network metrics 15 to the analytic component 8. The network metrics 15 are generated based on a network model which is built from the information on the intended use 11 of the network 5, the network configuration information 12, and the status data 13 collected in the network 5. This network model is maintained and updated by the digital twin 6. By means of the network model, the digital twin 6 is able to determine an impact of failure and performance issue scenarios 14 on network performance in consideration of the intended use 11 of the network 5.

The analytic component 8 is particularly configured to identify, from the network metrics 15, failure and performance issue scenarios 14 simulated by the digital twin 6, and to derive, from the failure and performance issue scenarios 14, monitoring rules 16 to detect network failures and network performance issues respectively. In turn, the network monitoring component 4 is configured to generate network alarms 17 in accordance with the monitoring rules 16. Upon occurrence of network alarms 17, the network controller 3 modifies configurations of selected network devices according to error and performance handling actions associated with the respective network alarm 17.

Moreover, the analytic component 8 is also configured to specify and request a simulation of additional failure and performance issue scenarios 14' within the digital twin 6 which have not been considered or explored so far. Accordingly, the failure injection component 7 is configured to send the additional failure and performance issue scenarios 14' to the digital twin 6 for being simulated. Generally, the failure and performance issue scenarios 14 are first provided to the failure injection component 7 by the analytic component 8. Then, the failure injection component 7 sends the failure and performance issue scenarios 14 to the digital twin 6. Optionally, additional failure scenarios 18 may be given to the failure injection component 7 by a network operator 2 and then passed to the digital twin 6. The network operator 2 may also be able to check the monitoring rules 16 provided to the network monitoring component 4.

According to a preferred embodiment, the analytic component 8 maintains and updates a network verification model generated from the network metrics 15. By means of this network verification model, the analytic component 8 determines the failure and performance issue scenarios 14' previously unexplored within the digital twin 6. Accordingly, the analytic component 8 requests the simulation of the previously unexplored failure and performance issue scenarios 14' within the digital twin 6 by providing these scenarios to the failure injection component 7. Advantageously, the analytic module 8 uses an intelligent search algorithm such as Bayesian Optimization (BA) to determine new scenarios which were previously completely unexplored. Moreover, the analytic component 8 is designed to compare a ground truth - representing an operation of the network 5 without any failures and performance issues - to any network metrics 15 associated with failures and performance issues. From comparing the ground truth to network metrics 15 associated with failures and performance issues, the analytic component 8 derives the monitoring rules 16.

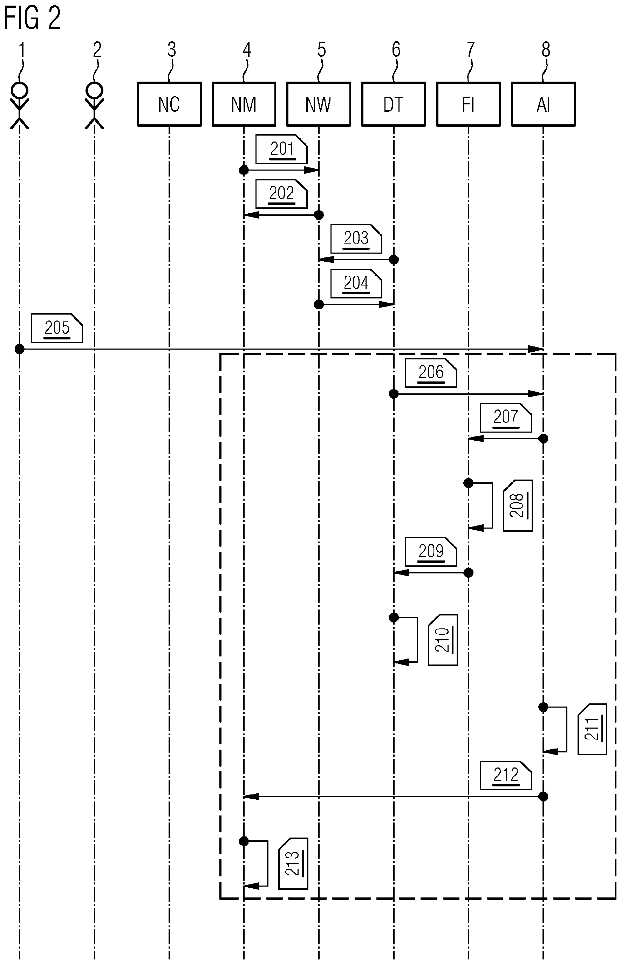

Generally, the system presented in this description is designed to work both during a network planning phase, and during a network operation phase. During the network planning phase, the digital twin 6 is not updated, whereas the digital twin 6 is updated during the network operation phase. Figure 2 illustrates how the system according to Figure 1 operates during the planning phase of the network 5. In this phase, the system is bootstrapped, and the network monitoring component 4 is initialized. During steps 201-204 the network 5, and its characteristics, e.g., topology, link bandwidth, delays, are discovered by the network monitoring component 4, and the digital twin 6.

For this purpose, the network monitoring component 4 sends a network discovery request to the network 5 (step 201). The network 5 reacts to this request by a network discovery response sent to the network monitoring component 4 (step 202). Also, the digital twin 6 sends a network discovery request to the network 5 (step 203) which is responded accordingly in step 204 by means of a network discovery response sent to the digital twin 6. Optionally, initial failure scenarios are provided to the analytic component 8 by the network operator (step 205).

After initializing the network monitoring component 4, a continuous loop for learning different failure scenarios and configuring the monitoring rules is formed in steps 206-213. This loop is symbolized in Figure 2 by a dashed rectangle around steps 206-213. At the beginning of the loop, different data from different sources is sent to the analytic component 8 to improve the network verification model. For doing so, the network metrics are transferred to the analytic component 8 by the digital twin 6 (step 206). In turn, the analytic component 8 requests data for further scenarios to be provided by the failure injection component 7 (step 207). Accordingly, the failure injection component 7 completes the requested scenarios (step 208) and sends them to the digital twin 6 (step 209) to be considered by its simulations.

In step 210, the digital twin 6 uses the new scenarios to simulate the network operation with new data and provides the resulting network metrics to the analytic component 8. Using this and other data from different sources, the analytic component 8 trains or improves respectively its network verification model (step 211). Thus, the analytic component 8 can predict new possible failure scenarios that have been previously unknown to the system. Using this information, a set of intelligent monitoring rules can be extracted and sent to the network monitoring component 4 according to step 212. The network monitoring component 4 receives and processes this information and updates the monitoring rules and policies accordingly (step 213). Therefore, the network management component 4 will be able to detect new failure and performance issue scenarios. Since steps 206-213 are comprised by a learning loop, the network verification model is continuously receiving new data and further improved, e.g., like a machine-learning model. Said loop continues for a limited number of iterations or until a certain confidence is reached.

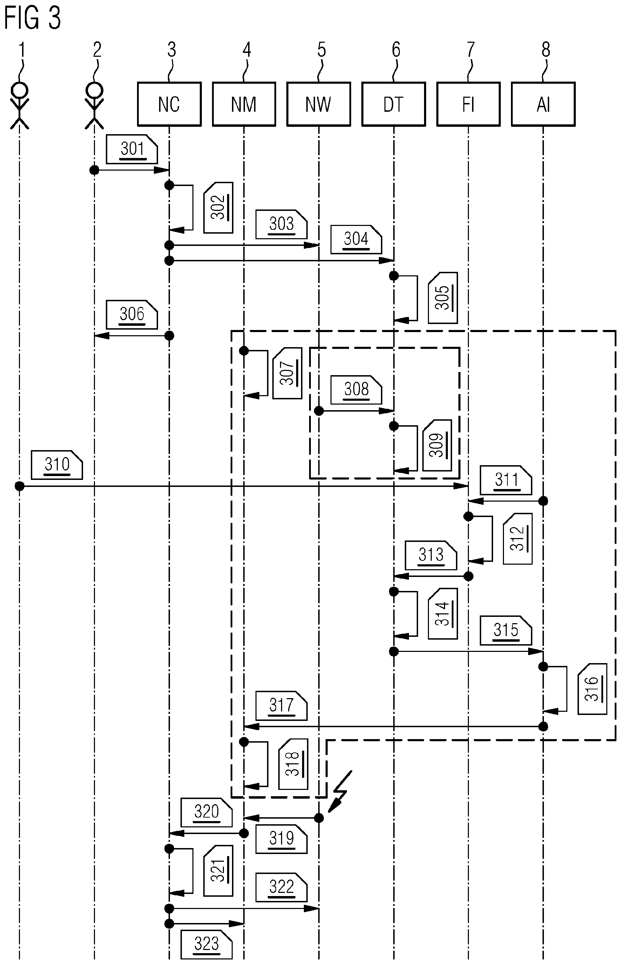

Figure 3 illustrates how the system according to Figure 1 operates during the operation phase of the network 5. In this phase, intents are arriving at the system over time. These intents are embedded in the network 5, such that quality of service (QoS) requirements can be met and guaranteed. While operating, the network 5 is continuously monitored to detect possible failures and QoS issues. Also, the network verification model is continuously being trained and improved with new data coming from different sources.

The sequence diagram depicted in Figure 3 starts with a new intent request sent to the network controller 3 from the user 2 (step 301). In step 302, the network controller 3 processes this request and calculates QoS-guaranteed network path for it. Then, the network 5 is configured accordingly (step 303). Consequently, the digital twin 6 is provided with new network configuration information applied to the network 5, and with new information on the intended use of the network (step 304). Based on this information, the digital twin 6 is updated in step 305. Finally, the network controller 3 confirms embedding the new intent by sending a new intent response to the user 2 (step 306).

In step 307, the network monitoring component 4 starts to monitor the network and to detect failures based on continuously updated and improved monitoring rules as described above. As symbolized by the dashed rectangle around step 308 for providing real-time network data to the digital twin 6 and step 309 for updating the digital twin 6, the digital twin 6 continuously keeps track of the status of the network 5. Updated network metrics are provided to the analytic component 8 accordingly to improve and train its network verification model.

As symbolized by the dashed rectangle around the steps 307-318, the analytic component 8 is continuously provided with the newly gathered data from different sources. Apart from the real-time network data provided via the digital twin 6, optional failure scenarios from the network operator 1 provided in step 310, failure injections by the failure injection component 7, and simulation results from the digital twin 6 are used to train and improve respectively the network verification model in step 316. For doing so and as already done also during the planning phase, the analytic component 8 requests data for further scenarios to be provided by the failure injection component 7 (step 311). Again, the failure injection component 7 completes the requested scenarios (step 312) and sends them to the digital twin 6 (step 313) to be considered by its simulations. According to step 314, the digital twin 6 uses these scenarios to continue simulating the network operation. Particularly, the digital twin 6 transfers the updated network metrics to the analytic component 8.

From the data gathered according to steps 307-316, the analytic component 8 produces new monitoring rules that are transferred to the network monitoring component 4 in step 317. Finally, in step 318, the network monitoring component 4 processes the new monitoring rules and updates its monitoring logic accordingly.

With the newly learnt monitoring rules that were previously unknown to the network operator 1, any failure type occurring in the network 5 can be detected by the network monitoring component 4 in step 319 and resolved as describe hereinafter. After detecting a failure, the network management component 4 sends a request to the network controller 3 for resolving the failure (step 320). Then, the network controller 3 resolves the failure (step 321) and updates the network configuration accordingly (step 322). Finally, the network management component 4 is notified by the network controller that the failure is resolved (step 323).

## Claims

1. Method for configuring devices of a communications network, comprising the steps of:
- simulating a behaviour of the network by means of a digital twin (6) of the network (5);
- providing the digital twin with network configuration information (12) applied to the network, with information on an intended use (11) of the network, and with status data (13) collected in the network;
- generating, by the digital twin, network metrics (15) and providing the network metrics to an analytic component (8) ;
- identifying, by the analytic component from the network metrics, failure and/or performance issue scenarios simulated (14) by the digital twin, and deriving, from the failure and/or performance issue scenarios, monitoring rules (16) to detect network failures and/or network performance issues;
- generating, by a network monitoring component (4), network alarms in accordance with the monitoring rules;
- upon occurrence of network alarms, modifying, by a network controller (3), configurations of selected network devices according to error and/or performance handling actions associated with the respective network alarm;
- specifying and requesting, by the analytic component, a simulation of additional failure and/or performance issue scenarios (14') within the digital twin;
- sending, by a failure injection component, the additional failure and/or performance issue scenarios to the digital twin for being simulated.

2. Method according to claim 1,
wherein the intended use of the network is provided to the network controller which calculates quality of service parameters derived from the intended use for at least one affected network path and configures associated network devices accordingly, and wherein the network devices comprise routers, switches, bridges, wireline end devices, access points, and/or wireless clients.

3. Method according to one of the claims 1 or 2,
wherein the network configuration information applied to the network is provided to the digital twin by the network controller.

4. Method according to one of the claims 1 to 3,
wherein the network metrics are generated based on a network model which is built from the network configuration information, the information on the intended use of the network, and the status data collected in the network, and wherein the network model is maintained and updated by the digital twin.

5. Method according to one of the claims 1 to 4,
wherein the digital twin comprises digital representations of network devices, network applications, and/or end devices connected to the communications network.

6. Method according to one of the claims 1 to 5,
wherein the digital twin determines an impact of the failure scenarios on network performance in consideration of the intended use of the network.

7. Method according to one of the claims 1 to 6,
wherein the digital twin is not updated during a network planning phase, and wherein the digital twin is updated during a network operation phase.

8. Method according to one of the claims 1 to 7,
wherein the analytic component maintains and updates a network verification model generated from the network metrics, wherein the analytic component determines failure and/or performance issue scenarios previously unexplored within the digital twin, and wherein the analytic component requests the simulation of the previously unexplored failure and/or performance issue scenarios within the digital twin.

9. Method according to one of the claims 1 to 8,
wherein the analytic component compares a ground truth, an operation without any failures and/or performance issues, to any network metrics associated with failures and/or performance issues, and wherein the analytic component derives the monitoring rules from comparing the ground truth to network metrics associated with failures and/or performance issues.

10. Method according to one of the claims 1 to 9,
wherein the analytic component is implemented by means of an artificial intelligence system.

11. Method according to one of the claims 1 to 10,
wherein the failure and/or performance issue scenarios are first provided to the failure injection component by the analytic component, and wherein the failure injection component then sends the failure and/or performance issue scenarios to the digital twin.

12. System for configuring devices of a communications network, comprising a digital twin, an analytic component, a failure injection component, a network monitoring component, and a network controller,
- wherein the digital twin is configured to simulate a behaviour of the network and to be provided with network configuration information applied to the network, with information on an intended use of the network, and with status data collected in the network;
- wherein the digital twin is further configured to generate network metrics and to provide the network metrics to the analytic component;
- wherein the analytic component is configured to identify, from the network metrics, failure and/or performance issue scenarios simulated by the digital twin, and to derive, from the failure and/or performance issue scenarios, monitoring rules to detect network failures and/or network performance issues;
- wherein the network monitoring component is configured to generate network alarms in accordance with the monitoring rules;
- wherein the network controller is configured to modify, upon occurrence of network alarms, configurations of selected network devices according to error and/or performance handling actions associated with the respective network alarm;
- wherein the analytic component is further configured to specify and request a simulation of additional failure and/or performance issue scenarios within the digital twin;
- wherein the failure injection component is configured to send the additional failure and/or performance issue scenarios to the digital twin for being simulated.
